# EUROPEAN PATENT APPLICATION

(11) **EP 2 913 361 A1**
(43) Date of publication of application: **02.09.2015**
(21) Application number: 13874936.1
(22) Date of filing: 18.02.2013
(51) Int. Cl.: C08L 67/04

(54) **DEGRADABLE RECYCLING MATERIAL**

(71) Applicant: U.S. Pacific Nonwovens Industry Limited, Hong Kong (CN)
(72) Inventor: WONG, Cho Kee, Kowloon Hong Kong (CN); WADSWORTH, Larry Clifton, Kowloon Hong Kong (CN)
(74) Representative: Walker, Ross Thomson
(86) International application number: PCT/CN2013/071648
(87) International publication number: WO 2014/124562

(57) **Abstract**

The invention relates to a novel biodegradable material prepared from PHA and PLA polymers, which can be used for manufacturing a blended product of PHA and PLA, and which can have accelerated biodegradation in a microorganic environment. The new product can be used for producing films, containers for solids and liquids, rigid or flexible packages, long-filament and short-fibre weaving, knitting and nonwoven fabrics, and composite products of fabrics, films and other materials by thermal forming, injection moulding or melt spinning. These blends also can have a long shelf life in a clean environment.

## Description

### FIELD OF THE INVENTION

This invention relates to blend of polyhydroxyalkonates (PHAs) and polylactic acid (PLA), wherein products made from this blend can have enhanced biodegradation in the environment with microorganisms. Another advantage of these blends is that they extend the shelf life under clean environment. Herein, through thermal forming, injection molding or melt spinning, the blend of PHAs/PLA can be configured for producing film, container for solid and liquid, rigid or flexible package, woven, knitted and non-woven fabric with filament and staple fiber, and composite product of fabric, film and other materials.

### BACKGROUND OF THE INVENTION

In the past 20 years, polylatic acid (PLA) has become a leading biodegradable/compostable polymer for preparation of plastics and fibers. This is because although the PLA is derived from natural and renewable materials, it is also thermoplastic and can be melt extruded to produce plastic item, fiber and fabric with good mechanical strength and pliability comparable to oil-based synthetics such as polyolefin (polyethylene and polypropylene) and polyester (polyethylene terephthalate and polybutylene terephthalate). PLA is made from lactic acid, which is a fermentation byproduct obtained from corn (e.g. *Zea mays*)*,* wheat (e.g. *Triticum* spp.), rice (e.g. *Oryza* sativa), or sugar beets (e.g. *Beta vulgaris*). When polymerized, the lactic acid forms a dimer repeat unit with the following structures:

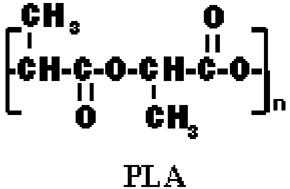

Unlike other synthetic fiber materials (such as cellulosics) originated from plant, PLA is more suited for melt spinning into fiber. Compared to the solvent-spinning process required for synthetic cellulosic fiber, PLA fiber made by adoption of melt spinning allows for lower economic cost and environmental cost, and the resulting PLA has a wider range of properties. Like polyethylene terephthalate polyester (PET), PLA polymer needs to be dried before melting to avoid hydrolysis during melt extrusion, and fiber from both polymers can be drawn (stretched) to develop better tensile strength. The PLA molecule easily forms a helical structure which brings about easier crystallization. Also the lactic dimer has three kinds of isomers: an L form which rotates polarized light in a clockwise direction, a D form which rotates polarized light in a counter-clockwise direction and a racemic form which is optically inactive. During polymerization, the relative proportions of these forms can be controlled, resulting in relatively broad control over important polymer properties. The control over a thermoplastic "natural" fiber polymer, unique polymer morphologies and the isomer content in the polymer enables the manufacturer to design a relatively broad range of properties in the fiber (*Dugan, 2001 and Khan, 1995*).

PLA is not directly biodegradable in its extruded state. Instead, it must first be hydrolyzed before it becomes biodegradable. In order to achieve hydrolysis of PLA at significant levels, both a relative humidity at or above 98% and a temperature at or above 60°C are required simultaneously. Once these conditions are met, degradation occurs rapidly (*Dugan, 2001 and Lunt, 2000*). However, the melt temperature can be controlled between about 120°C and 175°C so as to control the content and arrangement of the three isomers, in which case the polymer is completely amorphous under the low melting temperature. Some more amorphous polymers can be obtained after the addition of enzyme and microorganism in the melt.

PLA has been used to make a number of different products, and factors that control its stability and degradation rate have been well documented. Both the L-lactic acid and D-lactic acid produced during fermentation can be used to produce PLA (*Hartmann, 1998*)*.* One advantage of PLA is that the degradation rate can be controlled by altering factors such as the proportion of the L and D forms, the molecular weight or the degree of crystallization (*Drumright, et al, 2000*). For instance, Hartmann (1998) finds that unstructured PLA samples will rapidly degrade to lactic acid within weeks, whereas a highly crystalline material can take months to years to fully degrade. Such flexibility and control make PLA a highly advantageous starting material in the production of agricultural mulch fabric, where the PLA material is intended to be degraded in the field after a specific time period (*Drumright, 2000*).

PLA is decomposed into smaller molecules through a number of different mechanisms, and the final decomposition products are CO₂ and H₂O. The degradation process is influenced by temperature, moisture, pH value, enzyme and microbial activity while keeping free of being affected by ultraviolet light (*Drumright, et al, 2000*). In some early work that evaluates PLA degradation for biomedical application, Williams (1981) finds that bromelain, pronase and proteinase K can accelerate the decomposition rate of PLA. More recently, Hakkarainen et al. (2000) incubates PLA sample of 1.8 millimeter thickness at 86°F in a mixed culture of microorganisms extracted from compost. After 5 weeks of incubation, the compost-treated film has degraded to a fine powder, whereas the untreated control remains intact. It is note that this study uses only the L form while the degradation rate will differ based on the ratio of the D and L forms. Regardless, the work by Hakkarainen et al. (2000) illustrates that application of large quantities of readily available microorganisms from compost can accelerate the decomposition. Yet the PLA degradation studies so far are either performed in liquid culture in vitro or in active composting operations above 140°F (*Drumright et al., 2000; Hakkarainen et al., 2000; Lunt, 2000; Williams, 1981*). Rapid degradation occurs when PLA is composted at 140°F with nearly 100% biodegradation achieved in 40 days (*Drumright et al., 2000*). However, the stability below 140°F when the fabric is in contact with soil organic matter remains to be determined. Spunbond (SB) and meltblown (MB) nonwovens using PLA are firstly researched by Larry Wadsworth (*Khan et al., 1995*) at the University of Tennessee, USA *(*Smith, B.R., L.C. Wadsworth (Speaker), M.G. Kamath, A. Wszelaki, and C.E. Sams, "Development of Next Generation Biodegradable Mulch Nonwovens to Replace Polyethylene Elastic," International Conference on Sustainable Textiles (ICST 08), Wuxi, China, October 21-24, 2008[CD ROM*]).*

It is desirable for biodegradable polymers to resist many environmental factors during validity period, but to be biodegradable under disposal conditions. The biodegradation of PLA is studied in both aerobic and anaerobic, aquatic and solid state conditions at different elevated temperatures. It is found that in aerobic aquatic exposure, PLA biodegrades very slowly at room temperature but faster under thermophilic conditions. This also supports the findings above that PLA must be hydrolyzed before microorganism can utilize it as a nutrient source. The biodegradation of PLA is much faster in anaerobic solid state conditions than that in aerobic conditions at the same elevated temperatures. In a natural composting process, the behavior of PLA is similar to the aquatic biodegradation exposure, in which biodegradation only starts after it is heated up. These results reinforced a widely held view that PLA is compostable and is stable under mesophilic temperatures, but degrades rapidly during disposal of waste in compost or anaerobic treatment facilities (Itavaara, Merja, Sari Karjomaa and Johan-Fredrik Selin, "Biodegradation of Polylactide in Aerobic and Anerobic Thermophilic Conditions," Elsevier Science Ltd., 2002*).* In another study, the biodegradation levels of different plastics by anerobic digested sludge are determined and compared with those in simulated landfill conditions. Bacterial poly 93-hydroxyvalerate (PHB/PHV), a natural aliphatic polyester produced by bacteria, almost completely degrades in 20 days in anaerobic digested sludge; whereas, PLA, the aliphatic polyester synthesized from natural materials, and two other aliphatic polyesters evaluated, poly (butylenes succinate) and poly (butylenes succinate-co-ethylene succinate) fail to degrade after 100 days. A cellulosic control material (cellophane) degrades in a similar way to that of PHB/HV within 20 days. Furthermore, PHB/HV degrades well within 6 months in simulated landfill conditions *(*Shin, Pyong Kyun, Myung Hee Kim and Jong Min Kim, "Biodegradability of Degradable Plastics Exposed to Anaerobic Digested Sludge and Simulated Landfill Conditions, " Journal of Polymers and the Environment, 1566-2543, Volume 5, Number 1, 1997*).*

In the search for truly biodegradable polymer, polyhydroxyalkonates (PHAs) have been found to be naturally synthesized by a variety of bacteria as an intracellular storage material of carbon and energy. As early as the 1920s, poly[(R)-3-hydroxybutyrate] (P(3HB)) is isolated from *Bacillus megaterium* and identified later as a microbial reserve polyester. However, P(3HB) does not have important commercial value since it is found to be brittle and stiff over a long period and thus cannot be substituted for the mainstream synthetic polymers like polyethylene (PE) and polystyrene (PS). Eventually, the discovery of other hydroxalkonate (HA) units other than 3HB in microbial polyesters which can improve the mechanical and thermal properties when incorporated into P(3HB) have a major impact on research and commercial interests of bacterial polyesters. Their biodegradability in natural environment is one of the unique properties of PHA material. The microbial polyester is biodegradable in soil, sludge or sea water. Since PHA is a solid polymer with high molecular weight, it cannot be transported through the cell wall as a nutrient. Thus, the microorganisms such as fungi and bacteria excrete an enzyme knows as PHA degrading enzyme for performing extracellular degradation on PHA. Such enzyme hydrolyzes the solid PHA into water soluble oligomers and monomers, which can then be transported into the cell and subsequently metabolized as carbon and energy sources *(*Numata, Keiji, Hideki Abe and Tadahisa Iwata, "Biodegradability of Poly(hydroxalkonate) Materials," Materials, 2, 1104-1126, 2009*).* A random copolyester of [R[-3-hydroxybutyrate and [R]-3-hydroxyvalerate, P(3HB-co-3HV), is commercially produced by Imperial Chemical Industries (ICI) in the UK. It is shown that *Alcaligenes eutrophus* produces an optically active copolyester of 3-hydroxybutyrate (3HB) and 3-hydroxyvalerate (3HV) by using propionic acid and glucose as the carbon sources *(*Holmes, PA, (1985), "Applications of PHB: a Microbially, Produced Biodegradable Thermoplastic," Phys Technol 16:32-36 *from* Kunioka, Masao, Yasushi Kawaguchi and Yoshiharu Doi, "Production of Biodegradable copolyesters of 3-hydroxybutyrate and 4-hydroxybutyrate by Alcaligenes eutropus," Appl. Microbial Biotechnol (1989) 30: 569-573*).* The chemical structure for P(2HB-co-3HV) is as follows:

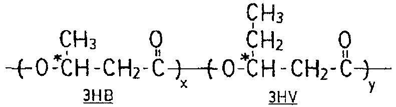

Furthermore, 3-hydroxypropionate, 4-hydroxyvutyrate, and 4-hydroxyvalerate are found to be new constituents of bacterial polyhdroxyalkonates (PHAs) and have gained much attention in a wide range of marine, agricultural and medical applications. More recently, the microbial synthesis of copolyesters of [R]-3-hydroxybutyrate and 4-hydroxybutyrate, P(3HB-co-4HB), by *Alcaligenes eutropus, Comamonas and Alcaligens latus* have been studied. The chemical structure of P(3HB-co-4HB) is as follows:

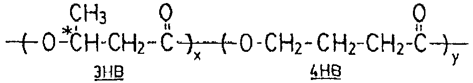

When 4-hydroxybutyric acid is used as the only carbon source for *Alcaligenes eutrophus,* P(3HB-co-34% 4HB) is produced with the content of 34% 4HB, while 4-hydroxybutyric acid in the presence of some additives is used as the carbon source for *Alcaligenes eutrophus,* P(3HB-co-4HB) copolyester with a large portion of 4HB (60-100 mol%) is produced. It has also been found that *Alcaligenes eutrophus* produces a random copolymer of P(3HB-co-4HB) with high efficiency in a one stage fermentation process by the usage of sucrose and 1,4-butyrolactone as the carbon source in a nitrogen free environment. The tensile strength of P(3HB-co-4HB) film decreases from 43MPa to 26 MPa while its elongation increases from 4-444% with the increasing content of 4HB fraction. On the other hand, as the content of 4HB fraction increases from 64% to 100%, the tensile strength of the film increases from 17MPa to 104 Mpa with the increase of 4HB (Saito, Yuji, Shigeo Nakamura, Masaya Hiramitsu and Yoshiharu Doi, "microbial Synthesis and Properties of Poly(3-hydroxybutyrate-co-4-hydroxybutyrate)," Polymer International 39 (1996), 169-174*).* Some studies show that the degree of crystallinity of P(3HB-co-4HB) decreases from 55% to 14% as the content of 4HB fraction increases from 0 to 49 mol%, indicating that 4HB unit cannot crystallize in the sequence of 3HB unit and acts as the defect in the P(3HB) crystal lattice. This is probably largely responsible for the reduced brittleness and improved toughness of P(3HB-co-4HB) compared to P(3HB). Also the melting temperature is found to decrease from 178°C to 150°C as the content of 4HB fraction increases from 0 to 18 mol% *(*Kunioka, Masao, Akira Tamaki and Yoshiharu Doi, Crystalline and Thermal Properties of Bacterial copolyesters: Poly(3-hydroxybutyrate-co-3-hydroxvalerate) and Poly(3-hydroxybutyrate-co-4-hydroxybutyrate)," Macromolecules 1988, 22, 694-697*).* It has also been shown that the biodegradation rate is increased by the presence of 4HB unit in P(3HB-co-4HB) *(*Kunioka, Masao, Yasushi Kawaguchi and Yoshiharu Doi, "Production of Biodegradable copolyesters of 3-hydroxybutyrate and 4-hydroxybutyrate by Alcaligenes eutropus," Appl. Microbial Biotechnol (1989) 30: 569-573*).* In another study, the enzymatic degradation of P(3HB-co-4HB) film is performed at 37 °C in a 0.1 M phosphate buffer of extracellular depolymerase purified from *Alcaligenes faecalis.* It is then found that the rate of enzymatic degradation notably increases with the increasing content of 4HB fraction and the highest rate occurs at 4HB of 28 mol% *(*Nakamura, Shigeo and Yoshiharu Doi, "Microbial Synthesis and Characterization of Poly(3-hydroxybutyrate-co-4hydroxybutyrate)," Macromolecules, 85 (17), 4237-4241, 1992*).*

This may be due to the resultant decrease in crystallinity; whereas, the presence of 4HB in excess of 85 mol% in the copolyester suppresses the enzymatic degradation *(*Kumaai, Y. Kanesawa, and Y. Doi, Makromol. Chem., 1992, 193, 53 *through* Nakamura, Shigeo and Yoshiharu Doi, "Microbial Synthesis and Characterization of Poly(3-hydroxybutyrate-co-4hydroxybutyrate)," Macromolecules, 85 (17), 4237-4241, 1992*).* In a comparison of the biodegradation rates of P(3HB-co-9% 4HB), P(3HB) and P(HB-co-50% 3HV) films, the P(3HB-co-9% 4HB) is found to be completely degraded in activated sludge in two weeks with the degradation rate of this biopolyester being much faster than those of the other two. The degradation rate of P(3HB) is much faster than that of P(HB-co-50% 3HV) film *(*Kunioka, Masao, Yasushi Kawaguchi and Yoshiharu Doi, "Production of Biodegradable copolyesters of 3-hydroxybutyrate and 4-hydroxybutyrate by Alcaligenes eutropus," Appl. Microbial Biotechnol (1989) 30: 569-573*).*

### SUMMARY OF THE INVENTION

The technical problem to be solved in this invention is to provide biodegradable material which has extended shelf life in clean environment and accelerated degradation in dirty environment, aiming at the drawbacks that the degradation rate of the existing biodegradable material is low.

In this invention, the technical solution adopted to solve its technical problem is as follows: biodegradable material is constructed. This material comprises PHAs and PLA, wherein the content of PLA is 1%-95% in mass percent. In the biodegradable material of this invention, the content of PLA is 10%-50% in mass percent.

In the biodegradable material of this invention, the biodegradable material comprises PLA and PHB, wherein the content of PLA is 75%-85% in mass percent and the content of PHB is 15%-25% in mass percent.

In the biodegradable material of this invention, the PHAs are PHBs or PHVs, or copolymers or blends of PHBs and PHVs.

In the biodegradable material of this invention, the PHB is P(3HB-co-4HB) polymerized by 3HB and 4HB.

In the biodegradable material of this invention, the mole percent of 4HB ranges from 5% to 85%.

In the biodegradable material of this invention, the biodegradable material also comprises cellulosic fiber.

In the biodegradable material of this invention, the biodegradable material can be configured for producing film, container for solid and liquid, rigid or flexible package, woven, knitted and non-woven fabric with filament and staple fiber, and composite product of fabric, film and other materials through thermal forming, injection molding or melt spinning.

In the biodegradable material of this invention, the melt spinning comprises spunbond and meltblown non-woven treatments.

In the biodegradable material of this invention, the non-woven fabric is bonded by wet adhesive or dry adhesive.

In the biodegradable material of this invention, the non-woven fabric is obtained by needlepunching, hydroentangling, thermal calendering, hot air laying or the following heating treatments including microwave, ultrasonic wave, welding, near infrared heating and far infrared heating.

In the biodegradable material of this invention, the composite product is laminated film or fabric which combines with spinning laying, needlepunching, air laying of pulp or fiber, or hydroentangling processes.

In the biodegradable material of this invention, the laminate comprises non-woven process of thermal spunbond-meltblown-spunbond type or ultrasonically bonded type, wherein the composite product is used for industrial protective clothing and medical protective clothing.

In the biodegradable material of this invention, the composite product comprises non-woven fabric of thermal spunbond-meltblown-spunbond type or ultrasonically bonded type which is used as a patent's lifting appliance, sitting bag or stretcher.

In the biodegradable material of this invention, the composite product includes meltblown filter media which exists as outer and inner facings through spun bonding and is sewn or thermally or ultrasonically bonded on the edges.

In the biodegradable material of this invention, the biodegradable material can be made into biodegradable mulching film or knitted or non-woven fabric with reinforced properties; since these non-woven fabric has much random deposition of fiber as well as low but controllable porosity, rain and dew can penetrate freely into the pore from soil and plant to increase biodegradation to suppress weed growth and maintain soil moisture.

When implementing the biodegradable material of this invention, the following advantageous effects can be achieved: this invention is directed to new polymer blend of PHAs and PLA which is configured for making blended product of PHAs and PLA and has accelerated biodegradation in the environment with microorganisms. This new product can be configured for producing film, container for solid and liquid, rigid or flexible package, woven, knitted and non-woven fabric with filament and staple fiber, and composite product of fabric, film and other materials through thermal forming, injection molding or melt spinning. Also, these blends can extend the shelf life under clean environment.

### DETAILED DESCRIPTION OF THE PREFERRED EMBODIMENT

Although the biodegradation of P(3HB-co-4HB) product is easy to occur in soil, sludge and sea water, the biodegradation rate in water in the absence of microorganisms is still very slow (Saito, Yuji, Shigeo Nakamura, Masaya Hiramitsu and Yoshiharu Doi, "Microbial Synthesis and Properties of Poly(3-hydroxybutyrate-co-4-hydroxybutyrate)," Polymer International 39 (1996), 169-174*).* Thus, the shelf life of P(3HB-co-4HB) product in clean environment such as dry storage in sealed package or in clean wipes cleansing solution etc. is very good. However, when located in dirty environments containing microorganisms such as soil, river water, river mud, compost of manure and sand, sludge and sea water, the disposed P(3HB-co-4HB) fabric, P(28.56- cooperative hydroxybutyrate) fabric, film and packaging material are easy to degrade. It should be pointed out that polylactic acid (PLA) is easy to be composed instead of being degraded in the dirty environments above. Heat and moisture in the resulting compost pile must firstly break the PLA polymer into smaller polymer chains which finally degrade to lactic acid. After that, microorganisms in the compost and soil consume the smaller polymer fragments and lactic acid as the nutrients.

Accordingly, the mixing of hydroxybutyrate with PLA may accelerate the degradation rate of blend product made from PHAs-PLA such as P(3HB-co-4HB). Furthermore, product made by mixing PHAs with PLA has extended its shelf life in clean environment. Although the price of PLA has decreased substantially over the past 10 years to just a little more than that of synthetic polymers such as polypropylene and PET polyester, the price of PHAs still remains two to three times higher than that of PLA. This is because PLA is synthesized on a large scale from lactic acid, while PHAs are produced by bacteria with specific carbon source and have to be extracted from the bacteria with a solvent. Therefore, it is not commercially feasible to mix more than 25% PHA with PLA to melt extrude products such as woven and knitted fiber, nonwoven fabric, film, food packaging container, etc.

Four groups of sample solution formulations are listed in tables 1-4, which are formulations for 400 Kg of clean wipes cleaning solution (typically the liquid contained in package of baby wipes); river water collected from the East River in Dongguan of China with some river mud; river mud collected from the East River in Dongguan of China; and a mixed compost of silt, sand and cow manure, respectively. The above-mentioned starting materials are mixed with distilled water and the resulting mixture is adjusted to a pH value of above 7 with dilute KOH. Two sample solutions with identical formulation are used for each treatment. Each of the treatment boxes containing the samples exposed to the treatment is covered and the pH value and percentage of solid are determined every two weeks. Average results in the first 4 weeks of exposure are shown in Table 5.

In one embodiment of this invention, two blends of PLA and PHB, i.e. 25 Kg of blend of 85% PLA (NatureWorks 2002D) and 15% PHB (3HB-co-4HB) as well as 25 Kg of blend of 75% PLA (NatureWorks 2002D) and 25% PHB (3HB-co-4HB) are melt blended and extruded as pellets that are then shipped to Biax-Fiberflilm Corporation, Greenville, WI, USA. Those pellets are melt spun to produce meltblown (MB) fabric with a basis weight of 50 g/m². For the purpose of comparative test, MB fabric of 100% PLA (NatureWorks 2002D) is also produced. During the MB process of these polymers, it becomes increasingly obvious that melting and hot air temperature used to prepare the MB fabric are too high since the 2002D PLA polymer has a very low melt index (indicating a very high molecular weight of PLA) and it requires higher temperature to increase the fluidity of MN PLA for its smooth extrusion through the meltblown die orifice. The melting temperature of 100% 2002D PLA is 274 °C and the hot air temperature is 576°C. On contrary, a melting temperature of 266 °C and a hot air temperature of 260 °C are generally applied for melt spinning spunbond grade PLA with a melt index of 70-80 *(*Wadsworth, Larry and Doug Brown, "High Strength, High Quality Meltblown Insulation, Filters and Wipes with Less Energy," Presentation to Guangdong Nonwovens Association Conference, Dongguan, China, November 26-27, 2009*).* Therefore, owing to such two blends, the PHB component contained apparently undergoes some thermal degradation, which is evidenced by much smoke coming from the extruded MB fiber and the low strength of the produced MB PLA/PHB fabric. In the following experiments, it is scheduled that PLA polymer (NatureWorks PLA 6251 D) with higher melt index (which is 70-85 and requires for much lower MB processing temperature) is employed to be mixed with PHB in the same ratio. In addition, similar composition using the 6251D PLA is scheduled to be made on a 1-meter spunbond non-woven pilot line. This typically operates at a temperature that is only a little above the melting point of the PLA and the blended PLA-PHB polymer so that even less thermal degradation occurs. This is because a filament drafting step absent from the MB process is adopted in the SB process, and thus the produced filament is obviously larger than that produced from the same polymer. Compared to the MB fabric with a diameter of 2-8 µm, the average diameter of the fiber in SB fabric is typically 12-25 µm. The second MB operation and SB operation of these polymer compositions will reduce the thermal degradation effect to a maximum extent, and thus the degradation observed in the biodegradation process is mainly from biodegradation. Also, since the MB and SB non-woven fabrics have large differences in their diameters, the smaller MB fiber has more surface area and is expected to undergo biodegradation more readily and more quickly.

The MB 100% 2002D MB fabric, the 85% 2002D PLA/15% PHB and the 75% 2002D/25% PLA rolled to have a width of 12.5 inch and a density of 50 g/m² are shipped from Biax-Fiberfilm Company back to U.S. Pacific Nonwovens & Technical Textile Technology (DongGuan) Limited which is located at No.2 East Dyke, Aozhitang Industrial Park in Dongcheng District, Dongguan of Guangzhou Province of China and subordinate to U.S. Pacific Nonwovens Industry. Herein, 1.5 meter of each fabric is immersed with different treatment methods and then left exposed to different treatment fluids together with samples to be removed from each treatment box, while the corresponding repeated treatments are carried out at intervals of 4 weeks, 8 weeks, 12 weeks, 16 weeks and 20 weeks.

Below is the specific experiment process. First of all, MB PLA and PLA-PHB fabrics added with clean wipes cleaning solution are stored in a porous steel basket and further exposed in the treatment box. After four weeks' treatment, MB sample in compost is gently washed in a nylon stocking. Thereafter, corresponding degradation conditions can be observed after washing and drying. Some river water is applied to the MB fabric in the same manner as that of the clean wipes cleaning solution. Then the MB fabric is placed in the porous steel basket in the covered treatment box until samples of the 100% MB PLA, 85% PLA-15% PHB, and 75% PLA-25% PHB are removed from all of the treatment boxes at an interval of 4 week increments up to a total of 20 weeks. In the case of river mud and silt/sand/manure compost, the fabric to be exposed thereto is first laid onto the treatment box while being immersed and thoroughly penetrated by the treatment solution. Subsequently, the fabric is inserted into a nylon panty hose stocking with one half of a 1.5-meter sample being placed into one leg and the other half into the other leg. The stocking containing the fabric is then gently pulled over the sample and buried into the proper box containing some river mud or compost. Besides, the treatment box is attached with a label by a nylon string for each stocking. The fabric samples removed every 4 week are laid onto a metal box with a wire screen on the bottom. In this case, a nylon knitted fabric is placed on top of the wire mesh, and the treated fabric is gently washed by applying some low pressure water onto the palm. Then a second nylon knitted fabric is placed on top of the washed sample and the fabric is gently turned over to wash the other side. Finally, all of the washed and treated fabrics are placed on a laundry drying table and dried over two days until dry before being taken to the laboratory for test. A portion of each of the treated and dried fabrics is sent to an external laboratory for scanning electron microscopy analyses to determine the extent of fiber breakage as an experimental result of the treatment process. In addition, gel permeation chromatography is adopted to determine if some changes and presumable loss in molecular weight of the polymer occur during exposure to the different treatments, and differential thermal analysis is adopted to determine any changes in crystalline phase.

After four weeks' different treatments, test results for physical property of the fabrics are shown in tables. Herein, table 6A is specific to 100% 2002D PLA MB fabric, table 7A to 85% 2002D PLA /15% PHB MB sample, and table 8A to 75% 2002D/25% PHB fabrics. The 100% MB PLA sample loses 6% of the machine direction (MD) tensile strength after exposure in the clean wipes cleaning solution for 4 weeks, while the 85%PLA/15% PHB and 75%PLA/PHB fabrics only lose 4% and 1% of the machine direction (MD) tensile strength, respectively, in the clean wipes cleaning solution. However, all of the 100% PLA, 85% PLA/15% PHB and 75% PLA/25% PHB lose 50%, 32% and 65% of cross machine direction (CD) trapezoid tearing strength, respectively. After 4 weeks in the river water, 100% MB PLA loses 26% of MD tensile strength and 64% of CD tearing strength, and the 85% PLA/15% PHB and 75% PLA/25% PHB lose 19% and 22% of MD tensile strength and 77% and 80% of CD tearing strength, respectively. After 4 weeks in the river mud, the 100% PLA fabric loses 91% of MD tensile strength and 98% of CD tearing strength, and the 85% PLA/15% and 75% PLA/25% PHB lose 76% and 75% of MD tensile strength and 96% and 87% of CD tearing strength, respectively. After 4 weeks in the silt/sand/cow compost, the 100% PLA loses 94% of MD tensile strength and 99% of CD tearing strength, and the 85% PLA/15% PHB and 75% PLA/25% PHB lose 76% and 86% of MD tensile strength and 99% and 83% of CD tearing strength, respectively. The air permeability of all the samples exposed to the river mud and compost increases, which causes higher air permeability value and indicate more open structures with the increase of biodegradation. Less increase in air permeability is caused to the MB 100% PLA fabric when compared with the PLA-PHB blend fabric under different treatments. Besides, none of the fabrics loses any weight and in fact some gain weight since it is difficult to remove all of the treatment debris from the samples without causing further damage to the fabrics.

**Table 1 Formulation for Clean Wipes Cleaning Solution Loaded in Two Different Boxes**

| **Ingredient** | **Weight Percentage (%)** | **Weight (Kg)** |
|---|---|---|
| Purified Water | 97.56 | 390.24 |
| Propylene Glycol | 1.2 | 4.8 |
| Lanolin | 0.6 | 2.4 |
| Cocoamphodiacte | 0.3 | 1.2 |
| Polysorbate-20 | 0.1 | 0.4 |
| Ethylparaben | 0.0167 | 0.0668 |
| Methylparaben | 0.0167 | 0.0668 |
| Propylparaben | 0.0167 | 0.0668 |
| Benzalkonium Chloride | 0.075 | 0.3 |
| Disodium EDTA | 0.075 | 0.3 |
| Citric Acid | 0.01 | 0.04 |
| aromatic hydrocarbon | 0.03 | 0.120 |
| Total | 100.0 | 400 Kg (approx. 400 L) |

**Table 2 Composition of River Water in Each of Two Boxes**

| **Ingredient** | **Weight (Kg)** |
|---|---|
| | |
| River Water | 380 |
| River Mud | 20 |
| Total | 400 Kg |

**Table 3 Composition of River Mud in Each of Two Boxes**

| **Ingredient** | **Weight (Kg)** |
|---|---|
| | |
| River Mud | 300 |
| River Water | 100 |
| Total | 400 |

**Table 4 Weight Compositions of Silt, Sand, Cow Manure and Distilled Water in Each of the Two Boxes**

| **Ingredients** | **Weight percentage (%)** | **Weight (Kg)** |
|---|---|---|
| | | |
| Silt | 23 | 69 |
| Sand | 23 | 69 |
| Cow Manure | 23 | 69 |
| Distilled Water | 31 | 93 |
| pH value is adjusted to 7.5 by 10% Potassium Hydroxide. (Weight of KOH is included in the composition of distilled water.) | | |
| Total | 100 | 300 Kg |

### Illustration of table 4:

69Kg of dry silt (obtained from river by USP gardener) is added to a large mixing container;
69Kg of dry cow manure is added, which has already been broken up into small pieces by a large electric mixer;
69Kg of dry sand is added slowly during mixing operation;
83Kg of distilled water is added slowly during stirring operation;

In the case of complete mixing, pH value is detected by a litmus paper or a pH meter. 10% potassium hydroxide (prepared in distilled water) is added slowly until the pH value reaches 7.5.

Remaining amount of distilled water is added so that the water containing calcium hydroxide accounts for 93Kg in total. pH value is checked and further adjusted to 7.5.

**Table 5 pH Value and Percentage of Solids in Treatment Boxes for Biax MB PLA (2002D) and MB PLA (2002D) Blended with 15% and 25% PHB**

| **Treatment** | | **pH value** | | | **Percentage of solid** | |
|---|---|---|---|---|---|---|
| | First | Replication | Average | First | Replication | Average |
| Clean wipes Cleaning Solution | 3.92 | 3.94 | 3.93 | 1.30 | 1.32 | 1.31 |
| River Water | 6.89 | 6.98 | 6.94 | 0.13 | 0.14 | 0.14 |
| River Mud | 7.19 | 7.18 | 7.18 | 51.8 | 50.4 | 51.1 |
| Silt/Sand/Manure Compost | 7.36 | 7.51 | 7.44 | 52.4 | 54.6 | 53.5 |

**Table 6A Weight, Thickness, Air Permeability and Strength Properties of 100% PLA (2002D) at post-production and after Exposure for Four Weeks to Clean Wipes Cleaning Solution, River Water, River Mud and Silt/Sand/Manure Compost**

| **100% PLA 2002D after 4 Weeks** | **Weight (g/m²)** | **Thickness (mm)** | **Air Perm. (l/m².s)** | **Tenacity (N)** | | | **Elongation (%)** | | **Tearing Strength (N)** | |
|---|---|---|---|---|---|---|---|---|---|---|
| | | | | **MD** | | **CD** | **MD** | **CD** | **CD** | |
| | | | | | **% Loss** | | | | | **% Loss** |
| **Post-production** | 46.4 | 0.400 | 2122 | 31.8 | | 14.0 | 10.1 | 57.2 | 22.1 | |
| **Clean wipes Cleaning Solution** | 47.2 | 0.366 | 2298 | 29.9 | 6 | 12.8 | 6.8 | 29.8 | 11.0 | 50 |
| **River Water** | 45.8 | 0.384 | 2260 | 23.6 | 26 | 9.8 | 3.2 | 3.8 | 8.0 | 64 |
| **River Mud** | 49.2 | 0.394 | 2672 | 3.0 | 91 | 1.2 | 3.0 | 1.2 | 0.4 | 98 |
| **Silt/Sand/ Manure Compost** | 56.8 | 0.472 | 2506 | 1.8 | 94 | 0.6 | 0.7 | 0.4 | 0.2 | 99 |

**Table 7A Weight, Thickness, Air Permeability and Strength Properties of 85% PLA (2002D)/15% PHB at post-production and after Exposure for Four Weeks in Clean Wipes Cleaning Solution, River Water, River Mud and Silt/Sand/Manure Compost**

| **85% PLA/15% PHB after 4 Weeks** | **Weight (g/m²)** | **Thickness (mm)** | **Air Perm (l/m².s)** | **Tenacity (N)** | | | **Elongation (%)** | | **Tearing Strength (N)** | |
|---|---|---|---|---|---|---|---|---|---|---|
| | | | | **MD** | | **CD** | **MD** | **CD** | **CD** | |
| | | | | | **% Loss** | | | | | **% Loss** |
| **Post-production** | 57.8 | 0.455 | 3134 | 14.4 | | 9.7 | 19.8 | 32.9 | 7.9 | |
| **Clean wipes Cleaning Solution** | 52.5 | 0.536 | 3876 | 13.8 | 4 | 9.4 | 13.5 | 21.3 | 3.4 | 57 |
| **River Water** | 58.8 | 0.460 | 3024 | 11.6 | 19 | 7.2 | 4.2 | 7.0 | 1.8 | 77 |
| **River Mud** | 63.2 | 0.531 | 3639 | 3.4 | 76 | 2.2 | 2.7 | 3.4 | 0.3 | 96 |
| **Silt/Sand/ Manure Compost** | 59.8 | 0.508 | 3916 | 3.5 | 76 | 1.4 | 3.6 | 3.6 | 0.1 | 99 |

**Table 8A Weight, Thickness, Air Permeability and Strength Properties of 75% PLA (2002D)/25% PHB at post-production and after Exposure for Four Weeks in Clean Wipes Cleaning Solution, River Water, River Mud and Silt/Sand/Manure Compost**

| **75% PLA/25% PHB after 4 Weeks** | **Weight (g/m²)** | **Thickness (mm)** | **Air Perm (l/m².s)** | **Tenacity (N)** | | | **Elongation (%)** | | **Tearing Strength (N)** | |
|---|---|---|---|---|---|---|---|---|---|---|
| | | | | **MD** | | **CD** | **MD** | **CD** | **CD** | |
| | | | | | **% Loss** | | | | | **% Loss** |
| **Post-production** | 53.8 | 0.387 | 3740 | 8.5 | | 3.6 | 5.2 | 12.0 | 3.7 | |
| **Clean wipes Cleaning Solution** | 56.2 | 0.344 | 3708 | 8.4 | 1 | 3.8 | 2.5 | 4.4 | 1.3 | 65 |
| **River Water** | 53.6 | 0.338 | 3627 | 6.6 | 22 | 2.4 | 1.6 | 1.8 | 0.74 | 80 |
| **River Mud** | 53.7 | 0.403 | 4502 | 2.1 | 75 | 0.8 | 2.6 | 2.6 | 0.48 | 87 |
| **Silt/Sand/ Manure Compost** | 61.5 | 0.460 | 5448 | 1.2 | 86 | 0.8 | 3.6 | 9.1 | 0.62 | 83 |

In addition to the P(3HB-co-4HB) polymerized from 3HB and 4HB as mentioned in the embodiments above, the skill in the art know that the PHAs contained in the biodegradable material in this application can also be PHBs or PHVs, or they can be copolymers or blends of PHBs and PHVs.

The skill in the art knows that, the biodegradable material in this application can be configured for producing film, container for solid and liquid, rigid or flexible package, woven, knitted and non-woven fabric with filament and staple fiber, and composite product of fabric, film and other materials through thermal forming, injection molding or melt spinning. In one preferred embodiment of this invention, the melt spinning comprises spunbond and meltblown non-woven treatments. In another preferred embodiment of this invention, the non-woven fabric is bonded by wet adhesive or dry adhesive. In yet another preferred embodiment of this invention, the non-woven fabric is obtained by needlepunching, hydroentangling, thermal calendering, hot air laying or the following heating treatments including microwave, ultrasonic wave, welding, near infrared heating and far infrared heating.

The skill in the art further knows that, the above-mentioned composite product is laminated film or fabric which combines with spinning laying, needlepunching, air laying of pulp or fiber, or hydroentangling processes. Herein, the laminate comprises non-woven process of thermal spunbond-meltblown-spunbond type or ultrasonically bonded type, wherein the composite product is used for industrial protective clothing and medical protective clothing. For example, the composite product comprise non-woven fabric of thermal spunbond-meltblown-spunbond type or ultrasonically bonded type which is used as a patent's lifting appliance, sitting bag or stretcher. In addition, the composite product includes meltblown filter media which exists as outer and inner facings through spun bonding and is sewn or thermally or ultrasonically bonded on the edges.

According to the teaching of this invention, the skill in the art can finish the above-mentioned operations with reference to the prior art. It is thus not repeatedly stated here. Although this invention is explained by some specific embodiments, the skill in the art should understand that various changes and equivalent replacement can be made to this invention without departing from the scope of this invention. Therefore, this invention is not limited to the specific embodiments disclosed herein; instead, it comprises all the implementation within the scope of the claims appended in this invention.

## Claims

1. Biodegradable material comprising PHAs and PLA, wherein the content of PLA is 1%-95% in mass percent.

2. The biodegradable material according to claim 1, wherein the content of PLA is 10%-50% in mass percent.

3. The biodegradable material according to claim 2, wherein the biodegradable material comprises PLA and PHB, wherein the content of PLA is 75%-85% in mass percent and the content of PHB is 15%-25% in mass percent.

4. The biodegradable material according to claim 1, wherein the PHAs are PHBs or PHVs, or copolymers or blends of PHBs and PHVs.

5. The biodegradable material according to claim 4, the PHB is P(3HB-co-4HB) polymerized by 3HB and 4HB.

6. The biodegradable material according to claim 5, wherein the mole percent of 4HB ranges from 5% to 85%.

7. The biodegradable material according to claim 1, wherein the biodegradable material also comprises cellulosic fiber.

8. The biodegradable material according to claim 1, wherein the biodegradable material can be configured for producing film, container for solid and liquid, rigid or flexible package, woven, knitted and non-woven fabric with filament and staple fiber, and composite product of fabric, film and other materials through thermal forming, injection molding or melt spinning.

9. The biodegradable material according to claim 8, wherein the melt spinning comprises spunbond and meltblown non-woven treatments.

10. The biodegradable material according to claim 9, wherein the non-woven fabric is bonded by wet adhesive or dry adhesive.

11. The biodegradable material according to claim 9, wherein the non-woven fabric is obtained by needlepunching, hydroentangling, thermal calendering, hot air laying or the following heating treatments including microwave, ultrasonic wave, welding, near infrared heating and far infrared heating.

12. The biodegradable material according to claim 7, wherein the composite product is laminated film or fabric which combines with spinning laying, needlepunching, air laying of pulp or fiber, or hydroentangling processes.

13. The biodegradable material according to claim 12, wherein the laminate comprises non-woven process of thermal spunbond-meltblown-spunbond type or ultrasonically bonded type, wherein the composite product is used for industrial protective clothing and medical protective clothing.

14. The biodegradable material according to claim 12, wherein the composite product comprises non-woven fabric of thermal spunbond-meltblown-spunbond type or ultrasonically bonded type which is used as a patent's lifting appliance, sitting bag or stretcher.

15. The biodegradable material according to claim 11, wherein the composite product includes meltblown filter media which exists as outer and inner facings through spun bonding and is sewn or thermally or ultrasonically bonded on the edges.

16. The biodegradable material according to claim 1, wherein the biodegradable material can be made into biodegradable mulching film or knitted or non-woven fabric with reinforced properties; since these non-woven fabric has much random deposition of fiber as well as low but controllable porosity, rain and dew can penetrate freely into the pore from soil and plant to increase biodegradation to suppress weed growth and maintain soil moisture.
